**Europäisches Patentamt**

**European Patent Office**

**Office européen des brevets**

(19)

(11) Veröffentlichungsnummer: **0 068 432**
**B1**

(12)

# EUROPÄISCHE PATENTSCHRIFT

(45) Veröffentlichungstag der Patentschrift:
20.04.88

(51) Int. Cl.⁴: **B 62 D 11/08**

(21) Anmeldenummer: **82105514.2**

(22) Anmeldetag: **23.06.82**

(54) Steuereinrichtung für Lenkkupplung und -bremse.

(30) Priorität: **25.06.81 US 277419**

(43) Veröffentlichungstag der Anmeldung:
**05.01.83 Patentblatt 83/1**

(45) Bekanntmachung des Hinweises auf die Patenterteilung:
**20.04.88 Patentblatt 88/16**

(84) Benannte Vertragsstaaten:
**DE FR GB IT**

(56) Entgegenhaltungen:
FR - A - 2 248 969
GB - A - 1 170 034
US - A - 3 068 976
US - A - 3 899 058
US - A - 4 044 849
US - A - 4 076 107
US - E - 29 293

(73) Patentinhaber: **DEERE & COMPANY, 1 John Deere Road,
Moline Illinois 61265 (US)**

(72) Erfinder: **Behlmer, Wilbur Dale, 2635 New Haven,
Dubuque Iowa 52001 (US)**

(74) Vertreter: **Gramm, Werner, Prof. Dipl.-Ing. et al,
Patentanwälte Gramm + Lins
Theodor-Heuss-Strasse 2, D-3300 Braunschweig (DE)**

**Beschreibung**

Die Erfindung betrifft eine Steuereinrichtung für Lenkkupplung und -bremse, insbesondere bei einem Raupenfahrzeug, bestehend aus einem ersten und zweiten Hauptsteuerhebel, die unabhängig voneinander um eine erste und zweite Schwenkachse zwischen einer gelösten und einer angezogenen Bremsstellung verschwenkbar sind; einem ersten und zweiten Kupplungssteuerhebel, die um eine dritte und vierte, parallel zueinander liegende Schwenkachse zwischen einer Kupplungseinrück- und -ausrückstellung verschwenkbar sind; aus einem ersten und zweiten Ventil, die wirkungsmässig dem ersten bzw. zweiten Kupplungssteuerhebel zugeordnet sind und von diesen so beaufschlagt werden, dass das Ventil die das Einrücken der zugeordneten Kupplung bewirkende Druckflüssigkeit durchlässt, wenn sich der zugeordnete Kupplungssteuerhebel in seiner Kupplungseinrückstellung befindet, dass das Ventil aber den Kupplungsrückdruck ablässt, wenn sich der zugeordnete Kupplungssteuerhebel in seiner Kupplungsausrückstellung befindet; und einer ersten und zweiten nachgebenden Verbindung, die den ersten Hauptsteuerhebel mit dem ersten Kupplungssteuerhebel bzw. den Hauptsteuerhebel mit dem zweiten Kupplungssteuerhebel verbinden.

Eine derartige Ausführungsform lässt sich der US-Patentschrift 3 494 449 entnehmen. Jeder der beiden Hauptsteuerhebel ist starr auf der äusseren Mantelfläche je einer um ihre Längsachse drehbaren Hülse befestigt, die durch Beaufschlagung eines Fusspedals um ihre Längsachse verdreht wird. Jeder Hauptsteuerhebel betätigt über ein angelenktes Gestänge eine Bremse. Durch Verdrehen der genannten Hülsen werden ausserdem die beiden Kupplungssteuerhebel beaufschlagt, wobei die Kraftübertragung über ein Gestänge sowie einen zwischengeschalteten Federpuffer erfolgt. Die beiden Ventile weisen jeweils einen Ventilschieber auf, die parallel nebeneinander angeordnet sind und mit ihrem einen Ende jeweils an einem Arm des zugeordneten Kupplungssteuerhebels anliegen. Die Verschiebung der Ventilschieber erfolgt gegen die Wirkung je einer Druckfeder.

Werden bei dieser vorbekannten Steuereinrichtung die beiden Fusspedale nicht betätigt, nehmen die beiden Hauptsteuerhebel ihre gelöste Bremsstellung und die beiden Kupplungssteuerhebel ihre Kupplungseinrückstellung ein. In dieser Position verbinden die beiden Ventilschieber die von einer Druckpumpe o.dgl. kommende Druckleitung mit dem Druckanschluss der beiden hydraulisch betätigten Kupplungen, die sich aufgrund des sie beaufschlagenden Flüssigkeitsdrucks in ihrer eingerückten Stellung befinden. Wird z.B. das rechte der beiden Fusspedale durchgetreten, erfolgen eine Verschwenkung des zugeordneten Hauptsteuerhebels sowie des zugeordneten Kupplungssteuerhebels. Letzterer verschiebt den ihm zugeordneten Ventilschieber in eine Stellung, in der die Druckflüssigkeitsverbindung zwischen Pumpe und Kupplung unterbrochen und statt dessen der Druckzulauf zur rechten Kupplung mit dem Sumpf verbunden sind. Aufgrund des dadurch entstehenden Druckabfalls wird die rechte Kupplung ausgerückt. Die Verschwenkung des rechten Hauptsteuerhebels führt ausserdem zum Anziehen der rechten Bremse. Entsprechend läuft der Vorgang bei Betätigung des linken Fusspedals ab. Werden hingegen beide Fusspedale gleichzeitig durchgetreten, werden zwar beide Kupplungssteuerhebel verschwenkt, was zur Verschiebung beider Ventilschieber führt, von denen jedoch der «rechte» Ventilschieber den Zulauf der Druckflüssigkeit zur linken Kupplung und der «linke» Ventilschieber den Druckflüssigkeitszulauf zur rechten Kupplung offen halten, so dass zwar beide Bremsen angezogen werden, jedoch beide Kupplungen eingerückt bleiben.

Vergleichbare Ausführungsformen zeigen die US-Patente Nr. Re. 29 293, 3 899 058 und 4 076 107. Bei allen diesen Steuereinrichtungen erfolgt bei Betätigung nur einer Bremse automatisch vor dem Anziehen dieser Bremse ein Ausrücken der entsprechenden Kupplung, während beim gleichzeitigen Betätigen beider Bremsen ein Ausrücken beider Kupplungen verhindert wird.

Diese vorbekannten Lösungsvorschläge sind entweder hinsichtlich ihrer Übertragungsgestänge oder hinsichtlich der Ventileinrichtung zu aufwendig, oder aber sie bauen nicht kompakt, oder aber es fehlt eine automatische Bremseinrichtung für den Fall, dass der Hydrauliksystemdruck abfällt, beispielsweise weil Teile der Steuereinrichtung versagen oder wegen Geschwindigkeitsverlustes des Fahrzeuges.

Der Erfindung liegt daher die Aufgabe zugrunde, die eingangs erläuterte Steuereinrichtung so zu verbessern, dass sie bei einfachen Bauteilen kompakt baut.

Diese Aufgabe wird gemäss der Erfindung durch folgende Merkmale gelöst:

a) Eine Verriegelung verbindet die beiden Kupplungssteuerhebel so miteinander, dass deren gleichzeitige Verschwenkung aus ihrer Kupplungseinrück- in ihre Kupplungsausrückstellung unterbunden ist;

b) das erste und zweite Ventil lassen jeweils einen Teil des Kupplungseinrückdruckes ab, um so ein teilweises Ausrücken der Kupplung zu bewirken, wenn sich die beider Kupplungssteuerhebel in einer Zwischenstellung zwischen Kupplungseinrück- und -ausrückstellung befinden;

c) die erste und zweite Schwenkachse der beiden Hauptsteuerhebel liegen parallel zueinander.

Bei separater Betätigung nur des einen oder aber des anderen Hauptsteuerhebels wird zuerst die diesem Hauptsteuerhebel zugeordnete Kupplung ausgerückt; anschliessend erfolgt das Anziehen der zugeordneten Bremse. Die gleichzeitige Betätigung beider Hauptsteuerhebel führt zum Anziehen beider Bremsen, wobei jedoch beide Kupplungen eingerückt bleiben. Die hierfür vorgesehene Verriegelung kann aus einem Lenker bestehen, dessen beiden gegenüberliegenden Enden jeweils an einem ersten Arm des ersten bzw. zweiten Kupplungssteuerhebels angelenkt sind.

Die neue Steuereinrichtung baut dann besonders klein, wenn die erste und zweite, die Hauptsteuerhebel mit den Kupplungssteuerhebeln kuppelnde nachgebende Verbindung eine erste und zweite Zugfeder sind. Aus dem gleichen Grund ist es besonders vorteilhaft, wenn die beiden Ventile einen ersten und zweiten Ventilschieber aufweisen, die in axialer Richtung miteinander fluchten und jeweils mit ihrem einen Ende an einem zweiten Arm des ersten bzw. zweiten Kupplungssteuerhebels anliegen.

Um bei einem Druckabfall im Hydrauliksystem ein automatisches Anziehen beider Bremsen sicherzustellen, können erfindungsgemäss vorteilhaft noch folgende Merkmale vorgesehen werden:

a) Ein erster und zweiter Nebensteuerhebel sind neben den beiden Hauptsteuerhebeln angeordnet und zwischen einer ersten und zweiten Position verschiebbar;

b) ein erster und zweiter Einweg-Mitnehmer sind am ersten bzw. zweiten Nebensteuerhebel vorgesehen und verschwenken die beiden Hauptsteuerhebel von ihrer gelösten in ihre angezogene Bremsstellung, wenn die beiden Nebensteuerhebel von ihrer ersten in ihre zweite Position verschoben werden;

c) eine elastische Spanneinrichtung ist mit den beiden Nebensteuerhebeln verbunden und drängt diese in ihre jeweils zweite Position; und

d) druckbeaufschlagte Betätigungsorgane halten die beiden Nebensteuerhebel nur so lange in ihrer jeweils ersten Position, wie die Betätigungsorgane ein normale Funktion anzeigendes Druckflüssigkeitssignal empfangen.

In der Zeichnung ist eine als Beispiel dienende Ausführungsform der Erfindung dargestellt. Es zeigen:

Figur 1 in Draufsicht und zum Teil im Horizontalschnitt eine Steuereinrichtung, deren Teile die Position für eine Geradeausfahrt des Raupenfahrzeuges einnehmen;

Figur 2 schematisiert die Darstellung gemäss Figur 1, wobei die Teile ihre Position nach manueller Betätigung beider Bremseinrichtungen einnehmen;

Figur 3 eine Darstellung gemäss Figur 2 bei angezogener rechter Bremse (Rechtskurve des Raupenfahrzeuges) und

Figur 4 eine Darstellung gemäss den Figuren 2 und 3 bei automatisch betätigten Bremsen.

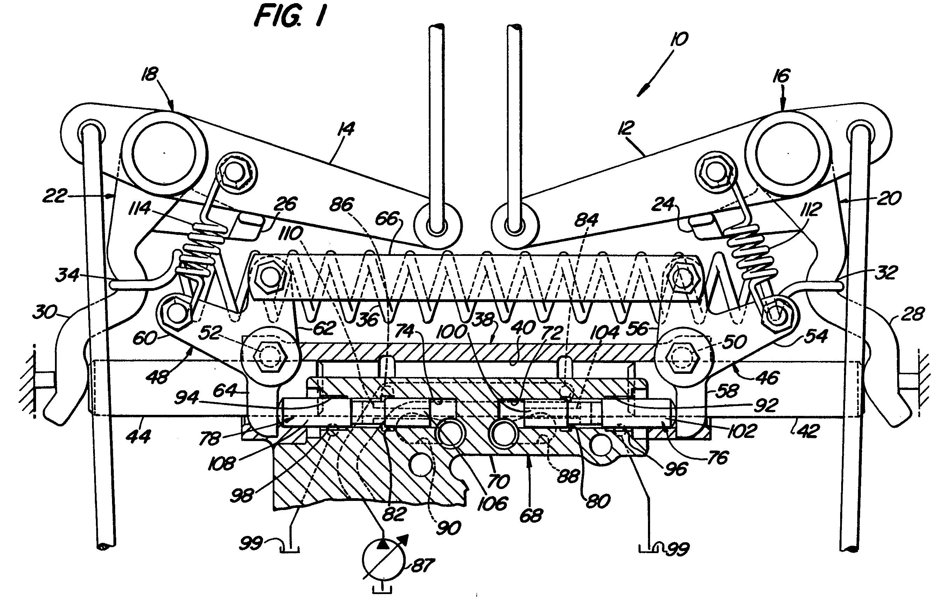

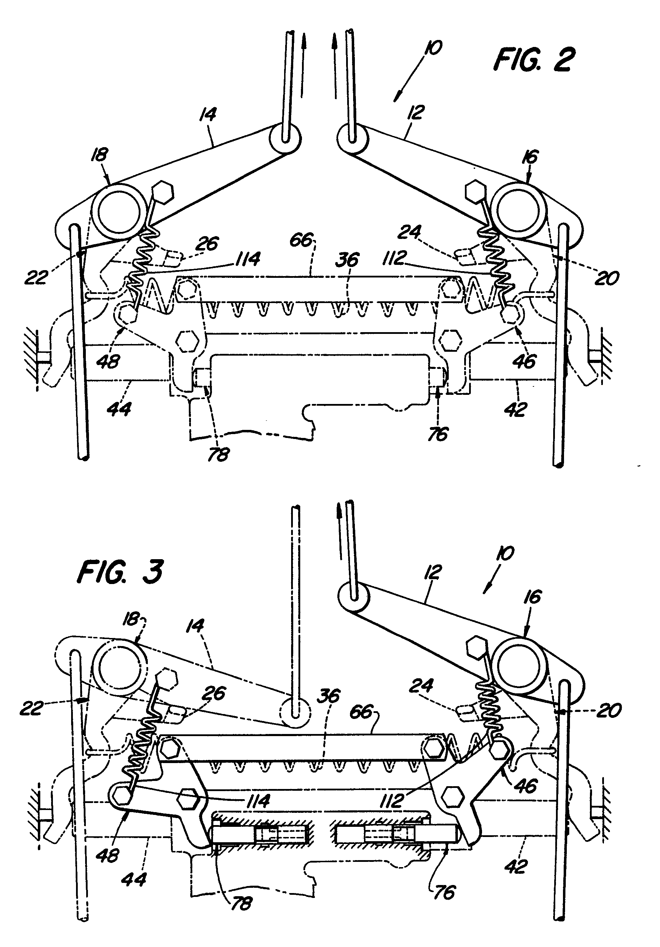

Figur 1 zeigt eine insgesamt mit dem Bezugszeichen 10 bezeichnete Steuereinrichtung für die Lenkkupplung und -bremse eines Raupenfahrzeuges. Diese Steuereinrichtung umfasst einen rechten und linken Hauptsteuerhebel 12, 14, die um eine rechte bzw. linke, parallel zueinander angeordnete Schwenkachse 16, 18 im bzw. entgegen dem Uhrzeigersinn verschwenkbar sind und zwar aus einer gelösten Bremsstellung gemäss Figur 1 in eine angezogene Bremsstellung gemäss Figur 2. Um diese Hebelverschwenkung automatisch durchführen zu können, sind ein rechter und linker Neben- bzw. Bremssteuerhebel 20, 22 vorgesehen, die koaxial zu dem jeweils zugeordneten Hauptsteuerhebel verschwenkbar sind und jeweils einen Einweg-Mitnehmer 24, 26 aufweisen, die im Verschwenkweg der Hauptsteuerhebel 12, 14 liegen, wenn diese aus ihrer gelösten Bremsstellung in ihre angezogene Bremsstellung verschwenkt werden.

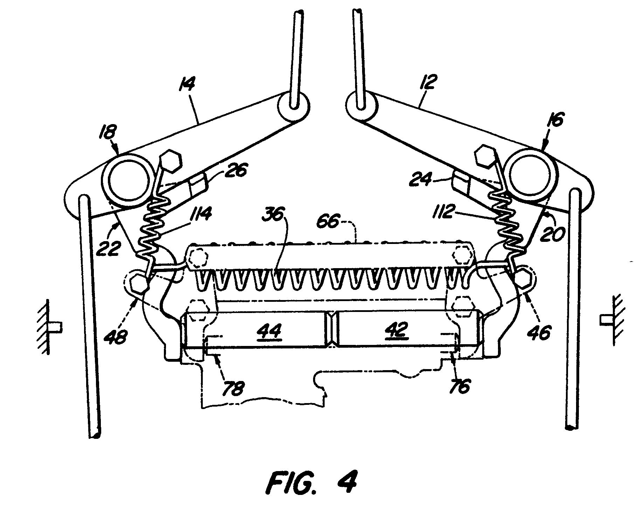

Diese Bremssteuerhebel 20, 22 weisen gemäss Figur 1 jeweils einen herabhängenden Arm 28, 30 auf, die mit einer Biegung versehen sind, die nach entgegengesetzten Seiten gerichtete Aufnahmen 32, 34 bilden, in die die hakenförmigen Enden einer zwischen die beiden Arme 28, 30 gespannten Zugfeder 36 eingehängt sind. Dadurch werden die Bremssteuerhebel 20, 22 im bzw. entgegen dem Uhrzeigersinn gegeneinander gezogen. Um aber eine entsprechende Verschwenkung der beiden Bremssteuerhebel 20, 22 so lange zu verhindern, wie der Hydrauliksystemdruck ausreicht, ist ein hydraulisches Betätigungsorgan 38 vorgesehen, das einen Zylinder 40 mit Kolben 42, 44 umfasst, die jeweils aus dem rechten bzw. linken Zylinderende ragen und mit ihren freien Enden gegen das jeweils untere Ende der herabhängenden Arme 28, 30 der Bremssteuerhebel 20, 22 anliegen. Der Zylinder 40 weist zwischen den beiden innenliegenden Enden der genannten Kolben 42, 44 einen Anschluss für Druckflüssigkeit auf, die bei ausreichendem Systemdruck die beiden Kolben nach aussen und damit die Bremssteuerhebel 20, 22 in die in Figur 1 dargestellte inaktive Stellung drückt, in der die Einweg-Mitnehmer 24, 26 neben den Hauptsteuerhebeln 12, 14 liegen. Bei einem Druckabfall im Hydrauliksystem, beispielsweise aufgrund eines Stillstands der Fahrzeugmaschine, reicht der auf die Kolben 42, 44 wirkende Flüssigkeitsdruck nicht mehr zur Überwindung der Zugkraft der Feder 36 aus, so dass letztere die Bremssteuerhebel 20, 22 gegeneinander verschwenkt in eine Stellung, die in Figur 4 dargestellt ist. Bei dieser Verschwenkung nehmen die Einweg-Mitnehmer 24, 26 die Hauptsteuerhebel 12, 14 mit, verschwenken letztere also in ihre angezogene Bremsstellung.

Zur Steuerung des Ausrückens der in der Zeichnung nicht näher dargestellten rechten bzw. linken, üblicherweise hydraulisch betätigten Kupplungen sind ein rechter sowie ein linker Kupplungssteuerhebel 46, 48 vorgesehen. Letztere sind verschwenkbar um parallel zueinander liegende Schwenkachsen 50, 52, die – bezogen auf Figur 1 – unterhalb und innerhalb von den beiden Schwenkachsen 16, 18 angeordnet sind. Die Kupplungssteuerhebel 46, 48 sind als Winkelhebel ausgebildet, wobei der Hebel 46 einen nach rechts ragenden Arm 54, einen nach oben ragenden Arm 56 sowie einen nach unten ragenden Ventilbetätigungsarm 58 aufweist. Der Winkelhebel 48 ist mit entsprechenden Armen 60, 62 und 64 versehen. Die Arme 56, 62 sind über einen Lenker 66 miteinander verbunden, der eine gleichzeitige Schwenkbewegung der Kupplungssteuerhebel 46, 48 entgegen dem bzw. im Uhrzeigersinn aus der in Figur 1 dargestellten Kupplungseinrückstellung verhindert.

Ein Lenkkupplungssteuerventil 68 ist mit einem Ventilgehäuse 70 zwischen den Ventilbetätigungsarmen 58, 64 der beiden Kupplungssteuerhebel 46, 48 angeordnet. In diesem Ventilgehäuse 70 sind Sackbohrungen 72, 74 angeordnet, die gegenüber den genannten Armen 58, 64 offen sind und jeweils einen Ventilschieber 76, 78 aufnehmen, die mit ihrem aussenliegenden Ende an den Armen 58, 64 anliegen. Eine einzelne Verschwenkung des Kupplungssteuerhebels 46 bzw. 48 führt zu einer Axialverschiebung des zugeordneten Ventilschiebers, um so in einer später im einzelnen erläuterten Weise den Kupplungseinrückdruck zu steuern und dadurch eine leichte oder scharfe Kurvenfahrt des Fahrzeuges einzuleiten.

Die Sackbohrungen 72, 74 weisen jeweils etwa in ihrer Mitte eine ringförmige Ausnehmung 80 bzw. 82 auf, in die Einlässe 84, 86 münden, die eine Strömungsverbindung zu einer Druckflüssigkeitspumpe 87 bilden. Neben den verschlossenen Enden der Bohrungen 72, 74 münden Auslässe 88, 90, die eine Verbindung zu nicht dargestellten druckbetätigten Betätigungsorganen normalerweise hydraulisch betätigter Kupplungen bilden. Neben den offenen Enden der Bohrungen 72, 74 ist eine ringförmige Ausnehmung 92 bzw. 94 vorgesehen, die mit einem Sumpfanschluss 96 bzw. 98 in Verbindung stehen, die ihrerseits in einen Sumpf 99 des Hydrauliksystems führen.

Der Ventilschieber 76 weist einen inneren Kolbenabschnitt 100 sowie einen im axialen Abstand hiervon angeordneten äusseren Kolbenabschnitt 102 sowie eine Innenbohrung 104 auf, die eine Strömungsverbindung zwischen dem Zwischenraum zwischen den beiden Kolbenabschnitten 100, 102 und dem inneren Ende des Ventilschiebers 76 herstellt. Befindet sich der Ventilschieber 76 in seiner üblichen, in Figur 1 dargestellten Kupplungseinrückstellung, stellt die Innenbohrung 104 eine Strömungsverbindung zwischen dem Einlass 84 und dem Auslass 88 her, während der äussere Kolbenabschnitt 102 die Strömungsverbindung zwischen dem Einlass 84 sowie dem Auslass 88 und dem Sumpfanschluss 96 unterbricht. In dieser Stellung erhält die rechte Kupplung den vollen Kupplungseinrückdruck. Es kann eine Möglichkeit für ein teilweises Ausrücken der Kupplung vorgesehen werden, wenn sich der Ventilschieber 76 aus seiner üblichen Kupplungseinrückstellung nach rechts verschiebt. Bei zunehmender Rechtsverschiebung unterbinden die Kolbenabschnitte 100, 102 zunehmend den Strömungsfluss von der ringförmigen Ausnehmung 80 und öffnen zunehmend den Strömungsfluss zur ringförmigen Ausnehmung 92, wobei die Strömungsverbindung zwischen Auslass 88 und Einlass 84 abnimmt, während die Strömungsverbindung zwischen Auslass 88 und Sumpfanschluss 96 zunimmt. Wenn der Ventilschieber 76 seine äusserste rechte Stellung erreicht hat, befindet er sich in der Kupplungsausrückstellung, in der der innere Kolbenabschnitt 100 die Strömungsverbindung zum Einlass 84 unterbricht, während der Auslass 88 über die Innenbohrung 104 mit dem Sumpfanschluss 96 verbunden ist. Die rechte Kupplung ist dann vollständig ausgerückt, da sie vom Einlass keinen Einrückdruck mehr erhält bzw. der vorhandene Einrückdruck in Richtung Sumpf abgelassen wird.

In vergleichbarer Weise weist der Ventilschieber 78 einen inneren Kolbenabschnitt 106 und einen äusseren Kolbenabschnitt 108 sowie eine Innenbohrung 110 auf, die den Raum zwischen den beiden Kolbenabschnitten mit dem Innenraum der Bohrung 74 bzw. dem Auslass 90 verbindet. In der in Figur 1 dargestellten Stellung verbindet die Innenbohrung 110 den Einlass 86 mit dem Auslass 90. Der äussere Kolbenabschnitt 108 unterbricht die Strömungsverbindung zwischen dem Sumpfanschluss 98 und den Anschlüssen 86, 90. Wird der Ventilschieber 78 nach links verschoben, verringert der Kolbenabschnitt 106 den Strömungsfluss von der ringförmigen Ausnehmung 82 und dem Einlass 86, während der Strömungsfluss zu der ringförmigen Ausnehmung 94 sowie zum Sumpfanschluss 98 langsam geöffnet wird. Hat der Ventilschieber 78 seine äusserste linke Position erreicht, befindet er sich in seiner Kupplungsausrückstellung, in der die Kolbenabschnitte 106, 108 eine Strömungsverbindung zwischen dem Auslass 90 und dem Sumpfanschluss 98 herstellen, während der Strömungsfluss vom Einlass 86 unterbrochen ist. Die linke Kupplung befindet sich dann in vollständig ausgerückter Stellung.

Zwischen den Hauptsteuerhebeln 12, 14 und den Armen 54, 60 der beiden Kupplungssteuerhebel 46, 48 ist jeweils eine Zugfeder 112, 114 gespannt. Figur 2 lässt erkennen, dass diese Zugfedern 112, 114 mit dem Lenker 66 so zusammenwirken, dass eine gleichzeitige Verschwenkung der Hauptsteuerhebel 12, 14 zum Anziehen der rechten und linken Bremse ermöglicht wird, während die Kupplungssteuerhebel 46, 48 und damit auch die Ventilschieber 76, 78 in ihrer normalen Kupplungseinrückstellung verbleiben. Andererseits wirken die Federn 112, 114 mit dem Lenker 66 so zusammen, dass bei einzelner Betätigung entweder des rechten oder des linken Steuerhebels 12, 14 ein teilweises oder vollständiges Ausrücken der rechten oder linken Lenkkupplung erreicht wird. Wird z.B. der Hauptsteuerhebel 12 im Uhrzeigersinn aus seiner in Figur 1 dargestellten gelösten Bremsstellung in seine in Figur 3 dargestellte angezogene Bremsstellung verschwenkt, so wird über die Feder 112 gleichzeitig auch der Kupplungssteuerhebel 46 entgegen dem Uhrzeigersinn verschwenkt, wodurch sich der Arm 58 dieses Kupplungssteuerhebels nach rechts bewegt, so dass der auf das linke Ende des Ventilschiebers 76 wirkende Kupplungseinrückdruck diesen Ventilschiebers nach rechts verschiebt, um so in der oben beschriebenen Weise ein teilweises oder vollständiges Ausrücken der rechten Kupplung zu bewirken. Die genannte Verschwenkung des Kupplungssteuerhebels 46 entgegen dem Uhrzeigersinn wird über den Lenker 66 auf den Kupplungssteuerhebel 48 übertragen, der dadurch in gleicher Richtung verschwenkt wird. Er drückt dabei den ihm zugeordneten Ventilschieber 78 nach innen, jedoch stellt diese Verschiebung lediglich einen Leerhub dar, der ohne jeden Einfluss auf die Steuerung der linken Kupplung ist.

In gleicher Weise kann ein teilweises oder vollständiges Ausrücken der linken Kupplung erreicht werden durch Verschwenkung des linken Hauptsteuerhebels 14 entgegen dem Uhrzeigersinn auf seiner in Figur 1 dargestellten Position in die in Figur 2 dargestellte Stellung. Diese Verschwenkung bewirkt über die Feder 114 eine Verschwenkung des Kupplungssteuerhebels 48 im Uhrzeigersinn, wodurch wiederum eine Verschiebung des Ventilschiebers 78 nach links unter Einwirkung des auf sein rechtes Ende wirkenden Flüssigkeitsdrucks erfolgen kann. Diese Linksverschiebung führt in der oben beschriebenen Weise zum teilweisen oder vollständigen Ausrücken der linken Kupplung.

Die Kupplungskontrollhebel 46, 48 können zur Verhinderung einer gleichzeitigen Verschwenkung in entgegengesetzte Richtungen auch über andere Einrichtungen als den dargestellten Lenker 66 miteinander verriegelt sein. Möglich wäre z.B. eine Zwangskopplung zwischen den beiden Kupplungssteuerhebeln über miteinander in Eingriff stehende Zahnsegmente.

**Patentansprüche**

1. Steuereinrichtung (10) für Lenkkupplung und -bremse, insbesondere bei einem Raupenfahrzeug, bestehend aus
- einen ersten und zweiten Hauptsteuerhebel (12, 14), die unabhängig voneinander um eine erste und zweite Schwenkachse (16, 18) zwischen einer gelösten und einer angezogenen Bremsstellung verschwenkbar sind;
- einem ersten und zweiten Kupplungssteuerhebel (46, 48), die um eine dritte und vierte, parallel zueinander liegende Schwenkachse (50, 52) zwischen einer Kupplungseinrück- und -ausrückstellung verschwenkbar sind;
- aus einem ersten und zweiten Ventil (68 bis 110), die wirkungsmässig dem ersten bzw. zweiten Kupplungssteuerhebel (46, 48) zugeordnet sind und von diesen so beaufschlagt werden, dass das Ventil (68 bis 110) die das Einrücken der zugeordneten Kupplung bewirkende Druckflüssigkeit durchlässt, wenn sich der zugeordnete Kupplungssteuerhebel (46, 48) in seiner Kupplungseinrückstellung befindet, dass das Ventil (68 bis 110) aber den Kupplungseinrückdruck ablässt, wenn sich der zugeordnete Kupplungssteuerhebel in seiner Kupplungsausrückstellung befindet; und
- einer ersten und zweiten nachgebenden Verbindung (112, 114), die den ersten Hauptsteuerhebel (12) mit dem ersten Kupplungssteuerhebel (46) bzw. den zweiten Hauptsteuerhebel (14) mit dem zweiten Kupplungssteuerhebel (48) verbinden, gekennzeichnet durch folgende Merkmale:
a) Eine Verriegelung (66) verbindet die beiden Kupplungssteuerhebel (46, 48) so miteinander, dass deren gleichzeitige Verschwenkung aus ihrer Kupplungseinrück- in ihre Kupplungsausrückstellung unterbunden ist;
b) das erste und zweite Ventil (68 bis 110) lassen jeweils einen Teil des Kupplungseinrückdruckes ab, um so ein teilweises Ausrücken der Kupplung zu bewirken, wenn sich die beiden Kupplungssteuerhebel (46, 48) in einer Zwischenstellung zwischen Kupplungseinrück- und -ausrückstellung befinden;
c) die erste und zweite Schwenkachse (16, 18) der beiden Hauptsteuerhebel (12, 14) liegen parallel zueinander.

2. Steuereinrichtung nach Anspruch 1, dadurch gekennzeichnet, dass die Verriegelung (66) aus einem Lenker besteht, dessen beiden gegenüberliegenden Enden jeweils an einem ersten Arm (56, 62) des ersten bzw. zweiten Kupplungssteuerhebels (46, 48) angelenkt sind.

3. Steuereinrichtung nach Anspruch 1 oder 2, dadurch gekennzeichnet, dass die erste und zweite, die Hauptsteuerhebel (12, 14) mit den Kupplungssteuerhebel (46, 48) kuppelnde nachgebende Verbindung (112, 114) eine erste und zweite Zugfeder sind.

4. Steuereinrichtung nach Anspruch 1, 2 oder 3, dadurch gekennzeichnet, dass die beiden Ventile (68 bis 110) einen ersten und zweiten Ventilschieber (76, 78) aufweisen, die in axialer Richtung miteinander fluchten und jeweils mit ihrem einen Ende (102, 108) an einem zweiten Arm (58, 64) des ersten bzw. zweiten Kupplungssteuerhebels (46, 48) anliegen.

5. Steuereinrichtung nach einem der vorhergehenden Ansprüche, gekennzeichnet durch folgende weitere Merkmale:
a) Ein erster und zweiter Nebensteuerhebel (20, 22) sind neben den beiden Hauptsteuerhebeln (12, 14) angeordnet und zwischen einer ersten und zweiten Position verschiebbar;
b) ein erster und zweiter Einweg-Mitnehmer (24, 26) sind am ersten bzw. zweiten Nebensteuerhebel (20, 22) vorgesehen und verschwenken die beiden Hauptsteuerhebel (12, 14) von ihrer gelösten in ihre angezogene Bremsstellung, wenn die beiden Nebensteuerhebel von ihrer ersten in ihre zweite Position verschoben werden;
c) eine elastische Spanneinrichtung (36) ist mit den beiden Nebensteuerhebeln (20, 22) verbunden und drängt diese in ihre jeweils zweite Position; und
d) druckbeaufschlagte Betätigungsorgane (42, 44) halten die beiden Nebensteuerhebel (20, 22) nur so lange in ihrer jeweils ersten Position, wie die Betätigungsorgane ein normale Funktion anzeigendes Druckflüssigkeitssignal empfangen.

**Claims**

1. Control device (10) for steering coupling and braking, especially in a track laying vehicle, consisting of
- a first and second main control lever (12, 14), which are pivotal independently of one another about first and second pivotal axes (16, 18) between a released and an applied brake position;
- a first and second coupling control lever (46, 48), which are pivotal about third and fourth, mutually parallel pivotal axes (50, 52) between a coupling engaging position and a disengaging position;

– a first and second valve (68 to 110), which are operatively associated with the first and second coupling control levers (46, 48), respectively and are so acted upon by these that the valve (68 to 110) allows flow of the pressure fluid effecting the engagement of the associated coupling when the associated coupling control lever (46, 48) is in its coupling engagement position, but so that the valve (68 to 110) vents the coupling engagement pressure when the associated coupling control lever is in its coupling disengagement position; and

– a first and second yielding connection (112, 114), which connect the first main control lever (12) to the first coupling control lever (46) and the second main control lever (14) to the second coupling control lever (48), respectively, characterized by the following features:

(a) an interlock (66) so couples together the two coupling control levers (46, 48) that their simultaneous swinging out of their coupling engagement position into their coupling disengagement position is prevented;

(b) the first and second valve (68 to 110) each permit venting of a part of the coupling engagement pressure, in order thus to effect partial disengagement of the coupling when the two coupling control levers (46, 48) are in an intermediate position between the coupling engagement and disengagement positions;

(c) the first and second pivotal axes (16, 18) of the two main control levers (12, 14) lie parallel to one another.

2. Control device according to claim 1, characterised in that the interlock (66) consists of a link whose two opposite ends are each pivoted to a first arm (56, 62) of the first and second coupling control levers (46, 48) respectively.

3. Control device according to claim 1 or 2, characterised in that the first and second yielding connections (112, 114) coupling the main control levers (12, 14) to the coupling control levers (46, 48), are first and second tension springs.

4. Control device according to claim 1, 2 or 3, characterised in that the two valve (66 to 110) comprise a first and second valve spool (76, 78) which are axially in line with one another and each engage at one end (102, 108) on a second arm (58, 64) of the first and second coupling control levers (46, 48) respectively.

5. Control device according to one of the preceding claims, characterised by the following further features:

(a) a first and second auxiliary control lever (20, 22) are arranged in association with the two main control levers (12, 14) and are displaceable between a first and second position;

(b) a first and second one-way connection (24, 26) are provided on the first and second auxiliary control levers (20, 22) respectively and swing the two main control levers (12, 14) from their released into their applied brake position, when the two auxiliary control levers are displaced from their first into their second position;

(c) an elastic tensioning device (36) is connected to the two auxiliary control levers (20, 22) and urges these into their respective second positions; and

(d) pressure actuated operating members (42, 44) retain the two auxiliary control levers (20, 22) in their respective first positions only so long as the operating members receive a fluid pressure signal indicating normal functioning.

## Revendications

1. Dispositif de commande (10) pour embrayage et frein de direction, en particulier dans le cas d'un véhicule à chenilles, comprenant:

– un premier et un second leviers de commande principaux (12, 14) pouvant pivoter indépendamment l'un de l'autre autour d'un premier et d'un second axes de pivotement (16, 18), entre une position de desserrage et une position de serrage du frein;

– un premier et un second leviers de commande d'embrayage (46, 48) pouvant pivoter autour d'un troisième et d'un quatrième axes de pivotement (50, 52) parallèles entre eux entre une position d'embrayage et une position de débrayage;

– une première et une seconde valves (68 à 110) qui sont conjuguées fonctionnellement respectivement au premier et au second leviers de commande d'embrayage (46, 48) et qui sont soumises à un actionnement tel, par ces leviers, que la valve (68 à 110) laisse passer le liquide sous pression provoquant l'engagement de l'embrayage conjugué lorsque le levier de commande d'embrayage conjugué (46, 48) se trouve dans sa position d'embrayage, mais que la valve (68 à 110) supprime la pression d'engagement de l'embrayage, lorsque le levier de commande d'embrayage conjugué se trouve dans sa position de débrayage; et

– un premier et un second organes de liaison flexibles (112, 114) qui relient le premier levier de commande principal (12) au premier levier de commande d'embrayage (46) et le second levier de commande principal (14) au second levier de commande d'embrayage (48) respectivement, caractérisé par les particularités suivantes:

a) un dispositif de verrouillage (66) relie mutuellement les deux leviers de commande d'embrayage (46, 48) de telle sorte que leur pivotement simultané à partir de leur position d'engagement de l'embrayage jusque dans leur position de débrayage est empêché;

b) la première et la seconde valves (68 à 110) permettent chacune la disparition d'une partie de la pression d'engagement de l'embrayage, pour assurer ainsi un débrayage partiel, lorsque les deux leviers de commande d'embrayage (46, 48) se trouvent dans une position intermédiaire entre la position d'embrayage et la position de débrayage;

c) le premier et le second axes de pivotement (16, 18) des deux leviers de commande principaux (12, 14) sont parallèles entre eux.

2. Dispositif de commande suivant la revendication 1, caractérisé en ce que le dispositif de verrouillage (66) est constitué par une biellette dont les deux extrémités opposées sont articulées chacune à un premier bras (56, 62) respectivement du premier et du second leviers de commande d'embrayage (46, 48).

3. Dispositif de commande suivant la revendication 1 ou 2, caractérisé en ce que le premier et le second organes de liaison flexibles (112, 114) accouplant les leviers de commande principaux (12, 14) avec les leviers de commande d'embrayage (46, 48) sont constitués par un premier et un second ressorts de traction.

4. Dispositif de commande suivant la revendication 1, 2 ou 3, caractérisé en ce que les deux valves (68 à 110) comportent un premier et un second tiroirs (76, 78) qui sont alignés axialement et qui sont appliqués chacun par une extrémité respective (102, 108) à un second bras (58, 64), respectivement du premier et du second leviers de commande d'embrayage (46, 48).

5. Dispositif de commande suivant l'une des revendications précédentes, caractérisé par les particularités supplémentaires suivantes:

a) un premier et un second leviers de commande auxiliaires (20, 22) sont disposés à côté des deux leviers de commande principaux (12, 14) et sont déplaçables entre une première et une seconde positions;

b) un premier et un second éléments d'entraînement à effet unidirectionnel (24, 26) sont prévus sur le premier et respectivement le second leviers de commande auxiliaires (20, 22) et font pivoter les deux leviers de commande principaux (12, 14) en les faisant passer de leur position de desserrage du frein à leur position de serrage du frein lorsque les deux leviers de commande auxiliaires sont déplacés de leurs première à leur seconde position;

c) un dispositif de sollicitation élastique (36) est relié aux deux leviers de commande auxiliaires (20, 22) et tend à les amener chacun dans leur seconde position; et

d) des organes d'actionnement soumis à l'effet de la pression (42, 44) ne maintiennent les deux leviers de commande auxiliaires (20, 22) dans leurs premières positions respectives que tant que les organes d'actionnement reçoivent un signal de pression de liquide indiquant un fonctionnement normal.

FIG. 1

0 068 432

FIG. 2

FIG. 3

11

FIG. 4